# EUROPÄISCHE PATENTSCHRIFT

(11) **EP 0 721 819 B1**
(45) Veröffentlichungstag und Bekanntmachung des Hinweises auf die Patenterteilung: **06.05.1998**
(21) Anmeldenummer: 95119155.0
(22) Anmeldetag: 05.12.1995
(51) Int. Cl.: B23Q 1/25

(54) **Werkzeugmaschine**
Machine tool
Machine-outil

(30) Priorität: 14.12.1994 DE 4444614
(43) Veröffentlichungstag der Anmeldung: 17.07.1996
(73) Patentinhaber: DECKEL MAHO GmbH, D-87459 Pfronten (DE)
(72) Erfinder: Hoppe, Gerd, D-34317 Habichtswald (DE)
(74) Vertreter: Beetz & Partner Patentanwälte

(56) Entgegenhaltungen:
- WO-A-85/03893
- DE-A- 2 833 145
- GB-A- 1 479 540
- US-A- 3 361 033
- US-A- 4 644 635

## Beschreibung

Die Erfindung betrifft eine Werkzeugmaschine zur mehrachsigen Bearbeitung eines Werkstückes in einer Aufspannung, bestehend aus einem formsteifen Maschinenständer, einem mittels einer Konsole am Maschinenständer verschwenkbar angeordneten Werkstücktisch, einem auf dem Maschinenständer in der Horizontalebene verfahrbar angeordneten Kreuzschlitten, einem am Kreuzschlitten vertikal verfahrbaren Vertikalfräskopf und einer programmierbaren Steuereinheit für die verschiedenen Funktionsabläufe der einzelnen Bauteile.

Bei der Bearbeitung von Werkstücken besteht das grundsätzliche Problem, mehrere Bearbeitungsvorgänge an verschiedenen Werkstückbereichen und in unterschiedlichen Koordinatenachsen mit gleichen oder unterschiedlichen Werkzeugen in einer Werkstückaufspannung durchzuführen, um ein Umspannen des Werkstückes auf dem Arbeitstisch zu vermeiden und gleichzeitig die Bearbeitungsgenauigkeit zu erhöhen. Unter diesen Gesichtspunkten sind die bekannten Universalfräs- und Bohrmaschinen bzw. entsprechende Bearbeitungszentren zur spanenden Werkstückbearbeitung entwickelt worden, die über je einen vertikalen und einen horizontalen Bohr- und Fräskopf verfügen, welche wechselweise in die Betriebsposition am Spindelstock gebracht werden können und welche eine Werkstückbearbeitung in mehreren Koordinatenachsen in der gleichen Werkstückspannung ermöglichen. Weiterhin sind Maschinenausführungen bekannt, bei denen ein einziger Fräskopf an einer Schwenkkonsole montiert ist, die an der Stirnseite eines Spindelgehäuses angeordnet ist und ein Verschwenken der Arbeitsspindel in eine Vertikale, eine Horizontale sowie auch in schräge Zwischenlagen ermöglicht. Schließlich sind auch bereits spanend arbeitende Werkzeugmaschinen bekannt, deren um die Mittelachse motorisch verdrehbare Werkstücktische (Rundtische) auf speziellen Konsolen montiert sind, die einen Mechanismus zum Verschwenken des Werkstücktisches um eine horizontale Koordinatenachse aufweisen und vertikal verstellbar an der Stirnseite des Maschinenständers montiert sind. Diese bekannten Ausführungen sind konstruktiv aufwendig und erfordern entsprechend hohe Investitions- und Betriebskosten. Darüber hinaus können sich bei hohen Ansprüchen an die Bearbeitungsgenauigkeit Probleme durch eine verminderte Steifigkeit aufgrund der Mehrzahl von Lagerungs- und Führungspaarungen inkl. der entsprechenden Fixiermittel ergeben.

Aus der DE-OS 2 833 145 ist eine Waagerecht-Fräsmaschine in Bettausführung bekannt, bei welcher an einem formsteifen relativ langen Maschinenbett an dessen rückwärtiger Stirnseite eine Bearbeitungseinheit verfahrbar montiert ist, deren waagerechte Arbeitsspindel motorisch in der vertikalen und in einer horizontalen Koordinatenachse verfahren kann. Auf der Oberseite des Bettes ist eine Tischkonstruktion in einer horizontalen Koordinatenachse motorisch verfahrbar angeordnet, die einen besonderen Tischsockel mit einer zum Maschinenständer hin nach unten geneigten Schrägfläche aufweist, an welcher eine Tragkonsole für den Werkstücktisch um die Mittelachse verdrehbar montiert ist. Aufgrund der Anordnung der Bearbeitungseinheit an der rückwärtigen Schmalseite des langgestreckten Bettes beansprucht diese Werkzeugmaschine einen erheblichen Aufstellplatz. Ferner befindet sich die Aufspannfläche des Werkstücktisches in einer ungünstigen Höhenlage, was die Zugänglichkeit insbesondere zum Aufspannen von komplex ausgebildeten Werkstücken erheblich beeinträchtigt. Schließlich ergeben sich Probleme mit den anfallenden Spänen, die sich auf den Horizontalflächen des Bettes und der Führungen ablagern können.

In der DE-T1 3 590 093 ist eine Vertikal-Fräsmaschine in Doppelständerausführung beschrieben, bei der ein vertikaler Spindelkopf über eine Konsole an einer Quertraverse verfahrbar angeordnet ist, wobei diese Quertraverse auf oberen Führungsschienen der beiden Maschinenständer motorisch verfahren werden kann. Zwischen den beiden Maschinenständern befindet sich eine um eine horizontale Achse verschwenkbare Tragkonstruktion für einen Werkstücktisch. Im unteren Teil dieser Tragkonstruktion ist ein Antriebsaggregat zum Verdrehen des Werkstücktisches um seine Hochachse angeordnet. Auch bei dieser Maschine besteht das Problem einer relativ schwierigen Aufspannung von Werkstücken auf dem zuvor in seiner Horizontallage gestellten Werkstücktisch, der sich zwischen den beiden Maschinenständern befindet. Darüber hinaus ist ein hochgenaues Bearbeiten von Werkstücken bei schräg oder vertikal gestelltem Tisch nicht möglich, weil die bei der Bearbeitung auftretenden Kräfte den quasi hängend in der Schräglage gehalterten Werkstücktisch verstellen können.

Schließlich ist aus der US-4 644 635, die den nächsten Stand der Technik bildet, ein Bearbeitungszentrum zur spanenden Vertikalbearbeitung von Werkstücken bekannt, das ebenfalls in Zwei-Ständer-Bauweise ausgeführt ist, wobei an einer Stirnseite einer oberen Quertraverse ein vertikaler Fräskopf mit eingebauter Bearbeitungsspindel in mehreren Achsen motorisch verfahrbar angeordnet ist. Auf der für beide Ständer gemeinsamen Basis befindet sich zwischen beiden Ständern eine Tischkonstruktion, die in längsgerichteten Führungsschienen auf der Basis horizontal verfahrbar ist und eine Konsole mit um 45° geneigter Tragfläche aufweist. Auf dieser Konsole ist ein im Querschnitt dreieckförmiger Tischträger um eine zur 45°-Tragfläche senkrechte Achse verdrehbar montiert, so daß in auf der größeren Seite des Trägers angeordnete Tischplatte zusammen mit einem aufgespannten Werkstück durch eine halbe Drehbewegung des Tischträgers aus einer horizontalen in eine vertikale Position - und umgekehrt - gebracht werden kann. Diese bekannte Maschine hat ebenfalls einen großen Platzbedarf und die weiteren Nachteile hoher Herstellungskosten sowie einer schwierigen Späneentsorgung.

Aufgabe der Erfindung ist es, eine Werkzeugmaschine zu schaffen, die bei relativ einfachem konstruktiven Aufbau nur einen geringen Platzbedarf hat und durch hohe Eigensteifigkeit eine sehr genaue Mehrachsenbearbeitung von Werkstücken in nur einer Aufspannung ermöglicht.

Diese Aufgabe wird erfindungsgemäß durch die Merkmale des Anspruchs 1 gelöst.

Die besondere Anordnung der Tragkonsole in einer speziell zu diesem Zweck an der Vorderseite des Maschinenständers vorgesehenen Ausnehmung mit schrägem Boden führt zu einer Vielzahl von praktischen Vorzügen, die mit keiner bekannten Maschinenausführung erzielt werden können. Ein ganz wesentlicher Vorteil besteht in der guten Zugänglichkeit des Werkstückstisches in seiner Horizontalposition, was das Zubringen und Abführen der Werkstücke und deren Aufspannen auf dem Werkstücktisch sowie auch die Beobachtung der einzelnen Bearbeitungsvorgänge wesentlich erleichtert. Ein weiterer Vorteil liegt in der hochsteifen und insgesamt sehr kompakten Ausbildung der Gesamtmaschine, was einerseits geringe Aufstellflächen in der Maschinenhalle und andererseits höchste Bearbeitungsgenauigkeiten ermöglicht. Erreicht wird dieser Vorzug durch die in den Maschinenständer hinein versetzte Ausnehmung mit schrägem Boden. Weiterhin führt das erfindungsgemäß verwirklichte technische Konzept zu einer wesentlichen Verringerung der benötigten Einzelteile um etwa zwei Drittel gegenüber herkömmlichen Schwenkkopfbearbeitungsmaschinen zur Fünf-Achsen-Bearbeitung von Werkstücken. Schließlich ergibt sich durch die erfindungsgemäße Ausbildung und Anordnung der Tischkonsole der für die Praxis außerordentliche Vorzug einer besonders günstigen Späneabfuhr, da die beim Bearbeiten erzeugten Späne und auch die Spülflüssigkeit frei nach unten abfallen können und Ablagerungen auf Führungs- und/oder Gleitflächen vermieden werden.

Durch die erfindungsgemäßen Maßnahmen kann der Werkstücktisch schnell aus einer horizontalen Lage in eine Vertikalposition verstellt und in jeder dieser Endstellungen sowie auch in Zwischenlagen durch geeignete Fixiereinrichtungen in Form von z.B. Klemmelementen, Zentrierbolzen und/oder lagegeregelten Motoren genau und stabil festgelegt werden. Hierzu ist es lediglich notwendig, die Konsole in dem zweckmäßigerweise als Kranz ausgeführten Auflager um 180° zu verdrehen und in der Endstellung die jeweiligen Fixiereinrichtungen zu aktivieren bzw. die selbsthemmende Bremswirkung des Motors auszunutzen. Dabei ist es für einen automatisierten Arbeitsablauf von besonderem Vorteil, daß ggf. auf Paletten montierte Werkstücke in automatisch ablaufenden Bewegungszyklen auf den zuvor in seine Horizontalposition gebrachten Werkstücktisch übergeben und aufgespannt werden können, woraufhin dann durch eine einfache gesteuerte Schwenkbewegung der Konsole der Werkstücktisch in seine Vertikalposition bewegt werden kann. Diese Bewegungsvorgänge vollziehen sich innerhalb einer sehr kurzen Zeitspanne, so daß die Totzeiten der Werkzeugmaschine weiter vermindert werden können.

Die erfindungsgemäße Anordnung des Werkstücktisches hat neben günstigen Platzverhältnissen noch den weiteren Vorteil gegenüber herkömmlichen Konsolwerkzeugmaschinen mit an ihrer Stirnseite quasi hängend angeordneten Konsolen, das die gesamte erfindungsgemäß angeordnete Konsole mit ihrer Unterfläche abgestützt wird, so daß die Gewichtskräfte der Konsole selbst, des Werkstücktisches und auch des Werkstückes sowie schließlich auch die bei der Bearbeitung auftretenden Belastungen als Druckkräfte über den Konsolenfuß großflächig in dem Maschinenunterbau, d.h. in dem Maschinenständer, eingeleitet werden. Gefördert wird diese Wirkung durch eine satte Auflage des Konsolenfußes, z.B. auf einem ringförmigen Tragteil, das gleichzeitig als Führung für die Konsolenverdrehung um deren Mittelachse ausgebildet sein kann. Zur Verdrehung der Konsole um ihre Dreh- und Mittelachse können herkömmliche Antriebsaggregate, wie Hydraulikmotoren, Elektromotoren mit und ohne Getriebe, verwendet werden. Falls der Werkstücktisch nicht nur in seiner horizontalen und in seiner vertikalen Endstellung sondern auch in Zwischenstellungen fixiert werden soll, um entsprechende Bearbeitungsvorgänge am Werkstück ausführen zu können, empfiehlt sich als Konsolenantrieb ein Schrittmotor oder ein NC-gesteuerter Antriebsmotor, der entsprechende Steuerbefehle von der programmierten Steuereinheit erhält und ggf. über ein innen vorgespanntes Getriebe eine wirksame Selbsthemmung enthält, durch die der Werkstücktisch ohne weitere Fixiermittel in seiner vorgegebenen Betriebsstellung sicher und mit hoher Genauigkeit festgelegt wird. Die Antriebsaggregate können entweder im Ständer oder auch im Fuß der Konsole angeordnet sein.

Von besonderer technischer Bedeutung ist die spezielle Formgebung der Konsole, durch die ein etwa gleichbleibender Arbeitsbereich bei horizontalem und auch bei vertikalem Werkstücktisch erreicht wird. Zu diesem Zweck besitzt die Konsole den in Draufsicht kreisrunden Fuß und dem seitlich neben der Drehachse angeordneten Tragansatz, dessen ebene Oberfläche zur Aufnahme des Werkstücktisches unter dem 45°-Winkel zur Drehachse verläuft. Die Größe und die Form dieses Ansatzes sind so gewählt, daß sich der Werkstücktisch stets seitlich neben der Drehachse befindet. Durch diese Anordnung des Werkstücktisches in Verbindung mit der speziellen Formgebung der Konsole wird erreicht, daß sich die Mittelachsen des vorzugsweise als motorisch verdrehbarem Rundtisch ausgebildeten Werkstücktisches mit der Konsolendrehachse in einem Punkt schneiden, und zwar unabhängig von der jeweiligen Drehstellung der Konsole.

Nach einem weiteren Aspekt der Erfindung können an einem entsprechend verbreiterten einzigen Maschinenständer zwei erfindungsgemäß ausgebildete Tischkonstruktionen in vorgegebenem Zwischenabstand nebeneinander montiert sein, wobei die auf den beiden Arbeitstischen aufgespannten Werkstücke nacheinander von der einzigen Vertikalspindel durch entsprechende Verfahrbewegungen der Bearbeitungseinheit bearbeitet werden können. Diese Ausführung ermöglicht ferner, daß auf einem der Arbeitstische ein Werkstück aufgespannt werden kann, während ein zweites auf dem anderen Arbeitstisch aufgespanntes Werkstück bearbeitet wird. Um die mit hoher Präzision durchzuführenden Aufspannarbeiten des einen Werkstückes nicht zu beeinträchtigen, kann zwischen den beiden Tischen eine Schutzwand vorgesehen werden, die zweckmäßigerweise so am Maschinenständer oder an einem anderen ortsfesten Teil montiert ist, daß die Verfahrbewegungen des Fräskopfes nicht beeinträchtigt werden.

Weitere Vorzüge und Besonderheiten der Erfindung sind in der folgenden Beschreibung von in der Zeichnung dargestellten Ausführungsbeispielen entnehmbar. Es zeigen:
Fig. 1A, 1B eine Fräs- und Bohrmaschine mit horizontal und vertikal ausgerichtetem Werkstücktisch in schematischer Seitenansicht,
Fig. 2 eine Fräs- und Bohrmaschine nach Fig. 1 mit weiteren Einzelheiten in Vorderansicht,
Fig. 3 schematisch eine Fräs- und Bohrmaschine mit zwei vorderseitig nebeneinander angeordneten Werkstücktischen.

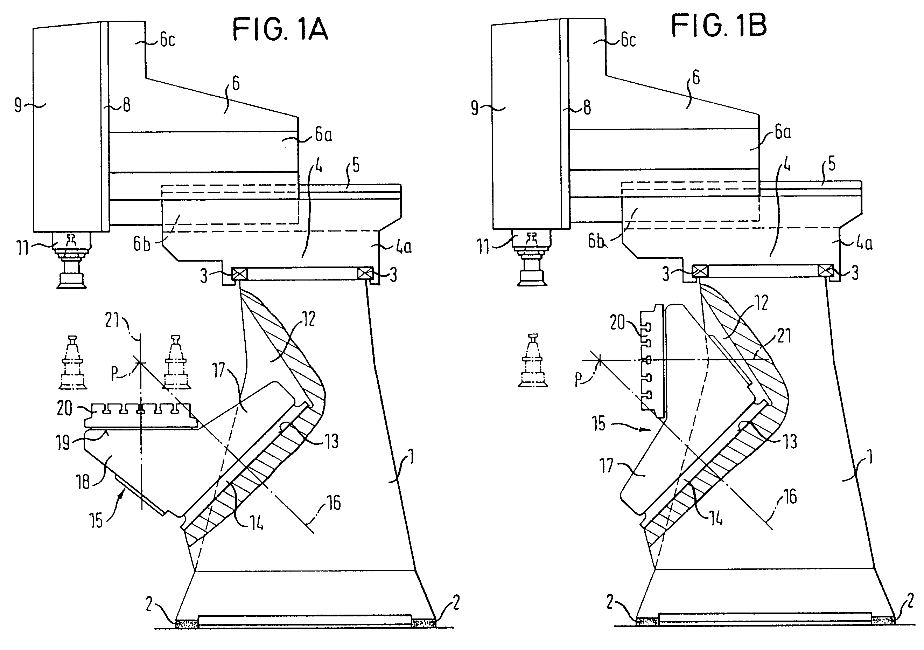

Bei der dargestellten Werkzeugmaschine handelt es sich um eine programmgesteuerte Fräs- und Bohrmaschine zur automatisierten Mehrachsbearbeitung von Werkstücken, die eine direkt am ortsfesten und formsteifen Maschinenständer abgestützten Werkstücktisch aufweist. Nach der schematischen Darstellung der Fig. 1A und 1B besitzt die Fräs- und Bohrmaschine einen formsteifen Maschinenständer 1 der über ggf. verstellbare Füße 2 auf dem Hallenboden bzw. einem Fundament aufsteht. An der Oberseite des Maschinenständers 1 sind senkrecht zur Zeichenebene verlaufende Führungsschienen 3 fest montiert, auf denen ein Querschlitten 4 motorisch verfahrbar geführt ist. Dieser Querschlitten 4 besteht aus einem durchgehenden Mittelteil 4a und zwei Seitenwangen 4b, an deren Oberseite je eine in der Zeichenebene der Fig. 1A horizontal verlaufende Führungsschiene 5 montiert ist. Auf diesen beiden Führungsschienen 5 läuft ein Längsschlitten 6 mittels Seitenführungen 6a, wobei der Mittelteil 6b dieses Längsschlittens 6 zwischen die beiden Wangen 4b des Querschlittens 4 hineinragt. Der Längsschlitten weist ein verlängertes Oberteil 6c und an seiner Stirnseite vertikale Führungselemente 8 auf, an denen ein vertikales Spindelgehäuse 9 als Bearbeitungseinheit motorisch verfahrbar geführt ist. In diesem Spindelgehäuse 9 befindet sich ein - nicht dargestellter - Antriebsmotor für eine Arbeitsspindel 11. Die vorstehend beschriebenen Schlitten 4, 6 und auch das Spindelgehäuse 9 sind durch nicht dargestellte Stellantriebe über ggf. Kugelrollspindeln in ihrer jeweiligen Achse verfahrbar.

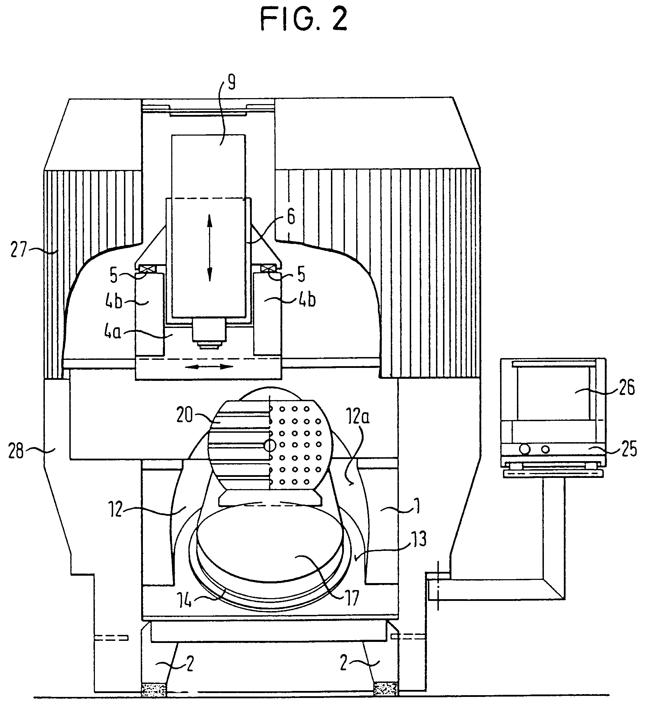

An der vorderen Stirnseite des Maschinenständers ist eine Ausnehmung 12 ausgebildet, die eine gewölbte Umfangswand 12a (vgl. Fig. 2) und einen ebenen Boden 13 besitzt, der unter einem Winkel von 45° nach vorn unten geneigt ist. Im Maschinenständer sind innere - nicht dargestellte - Versteifungen vorgesehen, die in Richtung des Bodens 13 verlaufen und diesem eine hohe Lagesteifigkeit geben. Auf diesem Boden 13 befindet sich ein Auflager 14, auf dem eine Konsole 15 um die Auflagermittelachse 16 mittels eines - nicht dargestellten - Antriebsaggregats verdrehbar abgestützt ist. Die Konsole 15 besitzt bei der in Fig. 1, 2 dargestellten Ausführung einen in Draufsicht kreisrunden Fuß 17 und einen mit diesem Fuß 17 einstückig ausgebildeten Tragansatz 18, der sich etwa parallel und seitlich neben der Mittelachse 16 erstreckt und eine unter einem Winkel von 45° zu dieser Mittelachse 16 verlaufende Tragfläche 19 aufweist. Auf dieser Tragfläche 19 des Tragansatzes 18 ist ein Werkstücktisch montiert, der bei der dargestellten Ausführung als drehangetriebener Rundtisch ausgebildet ist. Die Mittelachse 21 dieses Rundtisches 20 schneidet die Dreh- und Mittelachse 16 des Auflagers 14 bzw. der Konsole 15 stets in einem Punkt P, und zwar unabhängig von der jeweiligen Drehstellung der Konsole 15 bzw. der Schwenkstellung des Werkstücktisches 20. Wie aus Fig. 2 ersichtlich, ist die dargestellte Fräs- und Bohrmaschine mit einer Programmsteuerung versehen, die an einen Zentralrechner angeschlossen sein kann bzw. einen eigenen Rechner aufweist und deren Programmierung auch über ein Eingabeteil 25 mit Bildschirmanzeige 26 vorgenommen wird. Der Arbeitsraum ist maschinenseitig durch einen Lamellenvorhang 27 und bedienerseitig durch eine mit Fenstern und Türen versehene Schutzkabine 28 abgeschlossen. Wie insbesondere aus den Fig. 1A und 1B ersichtlich, können auf der dargestellten Werkzeugmaschine Werkstücke in der Stellung nach Fig. 1A, d.h. mit waagerechtem Werkstücktisch 20 ebenso wie in der Stellung nach Fig. 1B, d.h. in der Vertikalstellung des Werkstücktisches 20 mit der Vertikalspindel 11 bearbeitet werden. Durch die zurückgesetzte Anordnung des Werkstücktisches bzw. seiner Tragkonsole 15 in der Ständerausnehmung 12 ergibt sich ein vergleichsweise großer Arbeitsbereich bei relativ gering über die Ständerkonstruktion vorragendem Längsschlitten 6. Neben den gezeigten Endstellungen sind auch Bearbeitungen in Zwischenstellungen, d.h. in Schräglagen des Werkstückes, möglich. Bei entsprechender Auslegung des Antriebsaggregats für die Tragkonsole 15 und der Steuereinheit können auch Bearbeitungsvorgänge während der Schwenkbewegung dieser Tragkonsole 15 durchgeführt werden, was völlig neue Anwendungsmöglichkeiten, beispielsweise das Glätten oder Polieren von balligen Flächen, eröffnet. Durch die Verwendung des drehangetriebenen Rundtisches 20 als Werkstücktisch ergeben sich weitere Variationsmöglichkeiten der Werkstückbearbeitung. Da erfahrungsgemäß der überwiegende Teil der Bearbeitungsvorgänge mit der Vertikalspindel an einem auf einem horizontal ausgerichteten Werkstücktisch aufgespanntem Werkstück ausgeführt werden, ergibt sich bei diesen in Fig. 1A dargestellten Bearbeitungsvorgängen eine äußerst günstige Einleitung in der während der Bearbeitung auf das Werkstück und in den Werkstücktisch ausgeübten Vertikalkräfte über die Konsole 15 und das schrägstehende Auflager 14 in den hochsteifen Maschinenständer 1.

Für einen zügigen Bearbeitungsablauf einer Vielzahl unterschiedlicher Bearbeitungsvorgänge ist es besonders vorteilhaft, daß der Werkstücktisch durch eine einfache halbe Umdrehung der Konsole 15 aus der in Fig. 1A dargestellten Lage in die Vertikalposition nach Fig. 1B verstellt werden kann, ohne daß sich die geometrischen Verhältnisse grundlegend ändern, da sich in beiden Positionen die Mittelachsen 16 bzw. 21 der Konsole 15 bzw. des Werkstücktisches 20 unverändert in Punkt P schneiden.

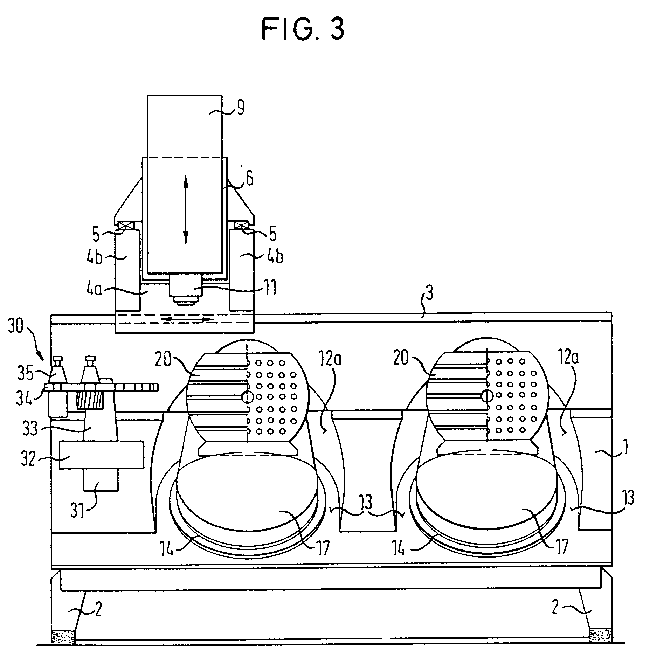

Die Werkzeugmaschine nach Fig. 3 entspricht in ihrem Grundaufbau der Maschinenausführung nach Fig. 1 und 2, was durch die Kennzeichnung von entsprechenden Bauteilen mit gleichen Bezugszeichen zum Ausdruck kommt. Unterschiedlich ist jedoch der verlängerte Maschinenständer und das Vorsehen von zwei Tischkonstruktionen der anhand der Fig. 1 und 2 im einzelnen beschriebenen Ausführung, die mit einem vorgegebenen Zwischenabstand in der Frontseite des Maschinenständers angeordnet sind. Jede dieser Tischkonstruktionen inkl. der jeweiligen Ausnehmung 12 mit dem Schrägbogen 13 entspricht der anhand der Fig. 1 und 2 beschriebenen Ausführung.

Zusätzlich ist in Fig. 3 noch am linken Ende des Maschinenständers ein Werkzeugmagazin dargestellt, das selbstverständlich auch bei einer Maschine nach den Fig. 1 und 2 vorgesehen sein kann. Um eine ausreichende Anzahl an Werkzeugspeicherplätzen zu erhalten, sind zweckmäßigerweise zwei derartige Tellermagazine 30 in Blickrichtung auf die Zeichnung hintereinander auf einem gemeinsamen Tragholm 31 montiert, der mit seinem hinteren Ende an der Stirnwand des Maschinenständers 1 befestigt ist und frei in den vorderen Raum hineinragt. Jedes Magazin 30 enthält einen Sockel 32 zur Aufnahme eines Drehantriebes und eine formsteife Säule 33, an deren oberen Ende der Magazinteller 34 drehbar gelagert ist. Durch die dargestellte Anordnung und Ausbildung der beiden Werkzeugmagazine 30 besteht die Möglichkeit, die einzelnen Werkzeuge 35 direkt und ohne gesonderten Werkzeugwechsler in die Arbeitsspindel einzuwechseln, wobei die Spindel 11 alle für einen Wechselvorgang erforderlichen Fahrbewegungen ausführt.

Die Erfindung ist nicht auf die dargestellte Ausführung beschränkt, sondern kann auch bei anderen Maschinentypen angewandt werden, bei denen es auf die Möglichkeit einer mehrachsigen Werkstückbearbeitung ankommt. Dies gilt beispielsweise für Schleifmaschinen, mit Energiestrahlen arbeitende Abtragsmaschinen, Elektroerosionsmaschinen und vergleichbare Bearbeitungszentren. Darüber hinaus kann es in Sonderfällen vorteilhaft sein, auf der Konsolenoberseite durch entsprechende Formgebung des Tragansatzes 18 zwei Werkstücktische vorzusehen, wobei der eine Werkstücktisch an einer Seite und der zweite Werkstücktisch an der anderen Seite der Drehachse positioniert wird. Dabei kann die Konsolenoberseite entweder durchgehend eben sein, so daß die beiden Werkstücktische in der gleichen Ebene liegen, oder die Konsolenoberseite kann unter einem rechten Winkel mit Mittelpunkt auf der Drehachse abgewinkelt sein, wobei auf jedem Seitenteil je ein Werkstücktisch montiert sein kann.

## Patentansprüche

1. Werkzeugmaschine zur mehrachsigen Bearbeitung eines Werkstücks in einer Aufspannung, bestehend aus
- einem formsteifen Maschinenständer (1),
- einem mittels einer Konsole (15) am Maschinenständer verschwenkbar angeordneten Werkstücktisch (20),
- einem auf dem Maschinenständer in der Horizontalebene verfahrbar angeordneten Kreuzschlitten (6),
- einem am Kreuzschlitten vertikal verfahrbaren Vertikalfräskopf (9) und
- einer programmierbaren Steuereinheit für die ververschiedenen Funktionsabläufe,
wobei
in der vorderen Stirnseite des Maschinenständers (1) eine Ausnehmung (12) vorgesehen ist, deren unter 45° nach vorn-unten geneigter Boden (13) ein Auflager (14) für die Tragkonsole (15) des Werkstücktisches (20) bildet, wobei die Tragkonsole (15) einen in Draufsicht kreisrunden Fuß (17) und einen damit einstückig ausgebildeten Tragansatz (18) aufweist, auf dessen unter einem Winkel von 45° zur Tragkonsolen-Drehachse (16) verlaufender Tragfläche (19) der Werkstücktisch (20) montiert ist.

2. Werkzeugmaschine nach Anspruch 1, dadurch gekennzeichnet, daß die auf dem Auflager (14) motorisch verdrehbare Tragkonsole (15) in vorgewählten Betriebsstellungen fixierbar ist.

3. Werkzeugmaschine nach Anspruch 1 oder 2, dadurch gekennzeichnet, daß der Tragansatz (18) der Konsole (15) eine gewölbte Außenfläche hat, die in der vertikalen Position des Werkstücktisches (20) (Fig. 1B) dem Verlauf der oberen Wandung (12a) der Ausnehmung (12) angepaßt ist.

4. Werkzeugmaschine nach einem der Ansprüche 1 bis 3, dadurch gekennzeichnet, daß die Auflagefläche der Tragkonsole (15) auf dem Auflager (14) mindestens um das zweifache größer als die Auflagefläche des Werkstücktisches (20) auf der Stützfläche (19) des Tragansatzes (18) ist.

5. Werkzeugmaschine nach einem der Ansprüche 1 bis 4, dadurch gekennzeichnet, daß an der Frontseite des Maschinenständers neben der Ausnehmung (12) zumindest ein Werkzeugmagazin (30) in Tellerausführung angeordnet ist.

6. Werkzeugmaschine nach einem der Ansprüche 1 bis 5, dadurch gekennzeichnet, daß der Maschinenständer (1) und seine Führungsschienen (3) verlängert sind und daß in der Frontseite des Maschinenständers (1, 2) Ausnehmungen (12) mit je einem Schrägboden (13) ausgebildet sind, in denen je eine Tischkonstruktion (14 bis 20) angeordnet ist.

7. Werkzeugmaschine nach Anspruch 6, dadurch gekennzeichnet, daß der verlängerte Maschinenständer (1), die beiden Tischkonstruktionen (14 bis 20) und die Werkzeugmagazine von einer gemeinsamen Maschinenhaube abgedeckt sind und daß zwischen den beiden Tischkonstruktionen innerhalb der Maschinenhaube eine bewegbare Trennwand vorgesehen ist.

## Claims

1. Machine tool for the multi-axis machining of a workpiece in one clamping, comprising
- a dimensionally stable machine column (1),
- a work table (20) swivellably arranged on the machine column by means of a knee (15),
- a compound slide (6) arranged on the machine column in such a way as to be capable of travelling in the horizontal plane,
- a vertical milling head (9) capable of travelling vertically on the compound slide and
- a programmable control unit for the various functional sequences,
wherein a recess (12), whose bottom (13) inclined at 45° forwards and downwards forms a support (14) for the carrying knee (15) of the work table (20), is provided in the front face of the machine column (1), the carrying knee (15) having a base (17) which is circular in plan view and a carrying extension (18) integrally formed therewith, on whose carrying surface (19) running at an angle of 45° to the axis of rotation (16) of the carrying knee the work table (20) is mounted.

2. Machine tool according to Claim 1, characterised in that the carrying knee (15), rotatable on the support (14) by means of a motor, can be fixed in preselected operating positions.

3. Machine tool according to Claim 1 or 2, characterised in that the carrying extension (18) of the knee (15) has a curved outer surface adapted, in the vertical position of the work table (20) (Fig. 1B), to the course of the upper wall (12a) of the recess (12).

4. Machine tool according to Claims 1 to 3, characterised in that the bearing surface of the carrying knee (15) on the support (14) is at least twice as large as the bearing surface of the work table (20) on the supporting surface (19) of the carrying extension (18).

5. Machine tool according to one of Claims 1 to 4, characterised in that at least one tool magazine (30) of plate design is arranged at the front side of the machine column beside the recess (12).

6. Machine tool according to one of Claims 1 to 5, characterised in that the machine column (1) and its guide rails (3) are lengthened and in that recesses (12) are formed in the front side of the machine column (1, 2), each having a sloping bottom (13) in each of which a table construction (14 to 20) is arranged.

7. Machine tool according to Claim 6, characterised in that the lengthened machine column (1), the two table constructions (14 to 20) and the tool magazines are covered by a common machine hood and in that a movable partition wall is provided between the two table constructions inside the machine hood.

## Revendications

1. Machine-outil pour l'usinage selon plusieurs axes de coordonnées d'une pièce bridée dans un montage, se composant:
- d'un montant de machine à stabilité de forme (1),
- d'une table porte-pièce (20) disposée pivotante sur le montant de la machine par l'intermédiaire d'une console (15),
- d'un chariot à glissières à deux mouvements rectangulaires (6) disposé déplaçable dans le plan horizontal sur le montant de la machine,
d'une tête de fraisage verticale (9) disposée mobile dans le plan vertical sur le chariot à glissières à deux mouvements rectangulaires, et
- d'une unité de commande à automate programmable pour la réalisation des différents déplacements fonctionnels,
dans laquelle il est prévu, dans la face frontale antérieure du montant de la machine (1) un évidement (12), dont le fond (13) incliné vers l'avant - le bas sous un angle de 45° forme un support (14) pour la console de support (15) de la table porte-pièce (20), dans laquelle la console support (15) comporte un pied (17) de forme circulaire vu du dessus et un épaulement de support (18) réalisé solidaire de celui-ci, sur la surface d'appui, s'étendant sous un angle de 45° par rapport à l'axe de rotation (16) de la console de support, duquel la table porte-pièce (20) est montée.

2. Machine-outil selon la revendication 1, caractérisée en ce que la console de support (15) susceptible d'être déplacée en rotation de manière motorisée sur le support (14) est verrouillable dans des positions de travail présélectionnées.

3. Machine-outil selon la revendication 1 ou 2, caractérisée en ce que l'épaulement de support (18) de la console (15) a une surface extérieure cintrée qui, dans la position verticale de la table porte-pièce (20) (figure 1B) est adaptée au tracé de la paroi supérieure (12a) de l'évidement (12).

4. Machine-outil selon l'une des revendications 1 à 3, caractérisée en ce que la surface d'appui de la console de support (15) sur le support (14) est au moins deux fois plus grande que la surface d'appui de la table porte-pièce (20) sur la face d'appui (19) de l'épaulement de support (18).

5. Machine-outil selon l'une des revendications 1 à 4, caractérisée en ce que sur le côté frontal du montant de la machine est monté, à côté de l'évidement (12) au moins un magasin à outils (30) se présentant sous la forme d'un plateau circulaire.

6. Machine-outil selon l'une des revendications 1 à 5, caractérisée en ce que le montant de la machine (1) et ses glissières de guidage (3) sont allongés et que dans la partie frontale du montant de la machine (1, 2) des évidements (12) comportant chacun un fond oblique (13) sont ménagés, dans chacun desquels une unité de table (14 à 20) est montée.

7. Machine-outil selon la revendication 6, caractérisée en ce que le montant de la machine allongé (1), les deux unités de table (14 à 20) et les magasins à outils sont recouverts par un capot de machine commun et en ce qu'entre les deux unités de table disposées à l'intérieur du capot de la machine une paroi de séparation mobile est prévue.
